# FASCICULE DE BREVET EUROPEEN

(11) **EP 0 894 046 B1**
(45) Date de publication et mention de la délivrance du brevet: **06.11.2002**
(21) Numéro de dépôt: 98903061.4
(22) Date de dépôt: 14.01.1998
(51) Int. Cl.: B29C 59/00, B60R 21/20

(54) **PROCEDE POUR REALISER UNE PIECE FINIE COMPRENANT UNE ZONE DESTINEE A PERMETTRE LA CREATION D'UN PASSAGE, PIECE FINIE ET ENSEMBLE CORRESPONDANT**
VERFAHREN ZUM HERSTELLEN EINES FERTIGEN BAUTEILES MIT EINEM BEREICH DER FÄHIG IST EIN DURCHGANG ZU BILDEN, FERTIGES BAUTEIL UND ENTSPRECHENDE EINHEIT
METHOD FOR MAKING A FINISHED PART COMPRISING A ZONE FOR PROVIDING A PASSAGE, FINISHED PART AND CORRESPONDING ASSEMBLY

(30) Priorité: 20.01.1997 FR 9700550
(43) Date de publication de la demande: 03.02.1999
(73) Titulaire: ALLIBERT INDUSTRIE, 92000 Nanterre (FR)
(72) Inventeur: BISOGNIN, Julien, F-60570 Andeville (FR); BAUDOUIN, Ivan, F-75019 Paris (FR); LANARD, Jean-Louis, F-78810 Feucherolles (FR)
(74) Mandataire: Lerner, François
(86) Numéro de dépôt international: FR9800064
(87) Numéro de publication internationale: WO98031530

(56) Documents cités:
- EP-A- 0 748 722
- EP-A- 0 749 872
- WO-A-96/30232
- DE-A- 19 617 874
- US-A- 5 121 942
- US-A- 5 395 668
- US-A- 5 451 075
- US-A- 5 456 487
- "INTEGRAL PASSENGER SIDE INFLATABLE RESTRAINT DOOR WITH LASER-GENERATED TEAR SEAM" RESEARCH DISCLOSURE, no. 356, 1 décembre 1993, page 775 XP000425375

## Description

L'invention concerne un procédé selon le préambule de la revendication 1 pour réaliser une pièce finie comprenant une zone formant un portillon de coussin gonflable et destinée à permettre la création d'un passage pour le coussin gonflable, une pièce selon le préambule de la revendication 7 et un ensemble comprenant la pièce.

L'invention trouve plus particulièrement ses applications dans le domaine de la décoration intérieure des véhicules, et concerne alors notamment la réalisation de planches de bord et de panneaux de porte.

Elle vise à réaliser de manière simple, fiable et peu onéreuse des pièces robustes et fiables permettant la création d'un passage de manière satisfaisante.

Certes, US-A-5 395 668 et FR-B-2 725 950 divulguent, pour réaliser une telle pièce, un procédé comportant les étapes suivantes :
a) réaliser une pièce comprenant un élément-support en matière(s) plastique(s) qui présente une faible épaisseur rapportée à ses autres dimensions et une feuille de liaison s'étendant sensiblement suivant la surface de cet élément-support,
b) ménager, dans la pièce, la zone déterminée formant un portillon délimité par un pourtour constitué d'une portion fragilisée présentant entre deux extrémités un affaiblissement mécanique et d'une portion d'articulation définissant, entre ces deux extrémités, un axe d'articulation chevauché par la feuille.

Toutefois, ce procédé n'est pas pleinement satisfaisant. En particulier, dans le cas du coussin gonflable, l'ouverture du portillon génère des fissures, voire des craquelures qui tendent à se propager dans la pièce. Or, celles-ci ne se limitant pas à la portion d'articulation, des fragments de cette pièce risquent de se détacher d'être projetés sur les occupants du véhicule et de les blesser. En outre, il se crée une dispersion de l'effort déployé par le coussin gonflable, ce qui requiert d'exercer des pressions très importantes avec le coussin gonflable pour réussir à ouvrir le portillon.

Certes, il aurait été possible d'utiliser des matériaux nobles résistant aux contraintes sans rupture. Toutefois, cette solution est relativement onéreuse.

Pour résoudre ce problème, l'invention propose que :
- la feuille de liaison utilisée présente une longueur et une largeur supérieures à celles de la zone déterminée, et
- lors de l'étape b), on réalise la portion fragilisée de telle sorte que la feuille de liaison soit présente de part et d'autre de la portion fragilisée, le long d'au moins la majeure partie de cette portion et que la feuille de liaison soit présente sur au moins l'essentiel de la zone déterminée.

Ainsi, la feuille de maintien est disposée dans la partie de la pièce ayant le plus tendance à se fissurer du fait des contraintes mécaniques et retient les éventuels fragments.

La fonction de la feuille de liaison dans la présente invention est donc différente dans US-A-5 395 668 et FR-B-2 725 950, où elle sert de moyen d'articulation renforcé. C'est pourquoi, elle est disposée dans ces documents à proximité de la portion d'articulation.

Ainsi, on pourrait prévoir éventuellement d'utiliser une feuille de liaison présente sur la majeure partie du portillon pour retenir les fragments et une feuille de liaison présente dans le voisinage de la portion d'articulation pour renforcer l'articulation si les contraintes mécaniques l'exigeaient.

La longueur et la largeur de la feuille représente ses dimensions extérieures respectivement perpendiculairement et suivant l'axe d'articulation.

Le document EP 0748722 décrit une méthode fabrication selon le préambule de la revendication 1 et une pièce selon le préambule de la revendication 7.

Selon une mise en oeuvre préférée de l'invention, lors de l'étape b), dans une partie au moins de la portion fragilisée, on réalise simultanément une découpe de la feuille et un affaiblissement mécanique du support par découpe d'une partie de son épaisseur.

Cette solution simple permet d'obtenir rapidement d'une part un renforcement particulièrement efficace du support jusqu'au bord de la portion fragilisée et d'autre part un affaiblissement mécanique satisfaisant de celui-ci, en positionnant précisément, relativement l'un à l'autre, la découpe de la feuille et l'affaiblissement mécanique du support. La découpe est de préférence continue et réalisée sur toute l'épaisseur de la feuille, bien que cela ne soit pas nécessaire.

Afin de résoudre encore plus efficacement et simplement les problèmes précités, l'invention propose que :
- lors de l'étape a), on réalise les opérations suivantes :
   - on introduit la feuille de liaison dans une cavité de moulage, et
   - on introduit de la matière plastique dans la cavité de moulage, cette matière plastique venant au contact de la feuille,
- lors de l'étape b), on réalise la portion fragilisée de telle sorte qu'elle soit entièrement et strictement incluse dans la feuille.

Ainsi, la feuille de liaison entoure le périmètre (toute la périphérie) du portillon et est présente sur l'intégralité du portillon. Le support est renforcé par la feuille de part et d'autre de la portion fragilisée sur toute cette portion. La technique de moulage permet de réaliser simplement et de manière satisfaisante la pièce, notamment en permettant une mise en place aisée de la feuille, de telle sorte que celle-ci soit présente partout où l'on souhaite réaliser la découpe.

Afin d'obtenir simplement et de manière fiable des pièces de qualité encore meilleure, l'invention propose que :
- on utilise un moule comprenant une cavité de moulage, une matrice, un poinçon et une cale mobile entre une position reculée et une position avancée, cette cale mobile s'insérant dans une cavité du poinçon en ménageant une fente entre elle et le poinçon lorsqu'elle est en position reculée et s'écartant du poinçon lorsqu'elle est déplacée vers la position avancée,
- lors de l'étape a), on introduit la feuille dans la cavité de moulage, cale mobile avancée ; puis en reculant la cale mobile on dispose dans cette fente une partie repliée de la feuille ; et on introduit la matière plastique dans la cavité de moulage.

On obtient ainsi une pièce dont la feuille présente une boucle en regard de la portion d'articulation. Le pivotement du portillon autour de l'axe d'articulation est ainsi facilité par la surlongueur de la feuille formée par cette boucle. De plus, la réalisation du support, sa liaison avec la feuille et l'obtention de cette boucle sont réalisés en une seule opération.

Selon une autre caractéristique avantageuse, l'invention propose que :
- lors de l'étape a), on réalise la pièce telle que la feuille soit présente sur toute ou du moins l'essentiel de la pièce, perpendiculairement à l'axe d'articulation,
- on rapporte par fixation la pièce sur un corps, et
- on lie la feuille au corps.

La présence de la feuille sur toute ou du moins l'essentiel de la pièce perpendiculairement à l'axe d'articulation réduit considérablement le risque de projection de fragments de la pièce. La liaison entre la feuille et le corps assure que la pièce restera maintenue par rapport au corps, dans la mesure où la feuille, non ductile ne risque pas de se rompre.

Afin de faciliter la fixation - liaison- de la feuille au corps, l'invention propose que :
- lors de l'étape a), on fasse ressortir une langue de cette feuille de la cavité de moulage,
- et on lie la langue de la feuille au corps.

L'invention a également pour objet une pièce finie composite. US-A-5 395 668 et FR-B-2 725 950 décrivent une pièce comprenant :
- un élément-support en matière plastique présentant une épaisseur faible rapportée à ses autres dimensions,
- une feuille de liaison liée à l'élément-support
ladite pièce présentant une zone déterminée formant un portillon de coussin gonflable et destinée à permettre la création d'un passage, cette zone étant délimitée par un pourtour constitué d'une portion fragilisée présentant deux extrémités et d'une portion d'articulation définissant, entre ces deux extrémités, un axe d'articulation chevauché par la feuille.

Toutefois, cette pièce présente les inconvénients précités. Pour y remédier, l'invention propose que :
- le long d'au moins la majeure partie de la portion fragilisée, la feuille soit présente de part et d'autre de cette portion, et
- la feuille soit présente sur l'essentiel de la zone déterminée.

Selon une autre caractéristique avantageuse, l'invention propose que la feuille s'étende, perpendiculairement à l'axe d'articulation, au-delà de la portion d'articulation et au moins jusqu'au bord de la pièce.

Ceci réduit le risque que la pression exercée par le coussin gonflable sur le portillon et l'inertie résultant sur ce portillon engendrent la rupture ou du moins une amorce de rupture de la pièce perpendiculairement à l'axe d'articulation.

L'invention concerne en outre un ensemble comprenant la pièce. Selon l'invention, il se caractérise en ce que :
- il comprend en outre un corps sur lequel est fixée la pièce, et
- la feuille est liée au corps.

L'invention va apparaître encore plus clairement dans la description qui va suivre, faite en référence aux dessins annexés dans lesquels :
- la figure 1 illustre une première étape d'un procédé conforme à l'invention,
- la figure 2 illustre une deuxième étape du procédé conforme à l'invention,
- la figure 3 illustre, en situation, une pièce finie réalisée après les étapes des figures 1 et 2,
- la figure 4 est une vue suivant la flèche IV de la figure 3,
- la figure 5 illustre, en situation, la pièce finie de la figure 3, après ouverture d'un coussin gonflable,
- la figure 6 illustre, à échelle agrandie, une variante de la pièce finie de la figure 3,
- la figure 7 illustre une autre variante de la pièce finie, vue en coupe suivant la flèche VII-VII de la figure 3,
- la figure 8 illustre encore une autre variante de la pièce finie, vue en coupe suivant la flèche VII-VII de la figure 3,
- la figure 9 illustre une variante de feuille de liaison,
- la figure 10 illustre en coupe une pièce finie intégrant une autre variante de feuille de liaison.

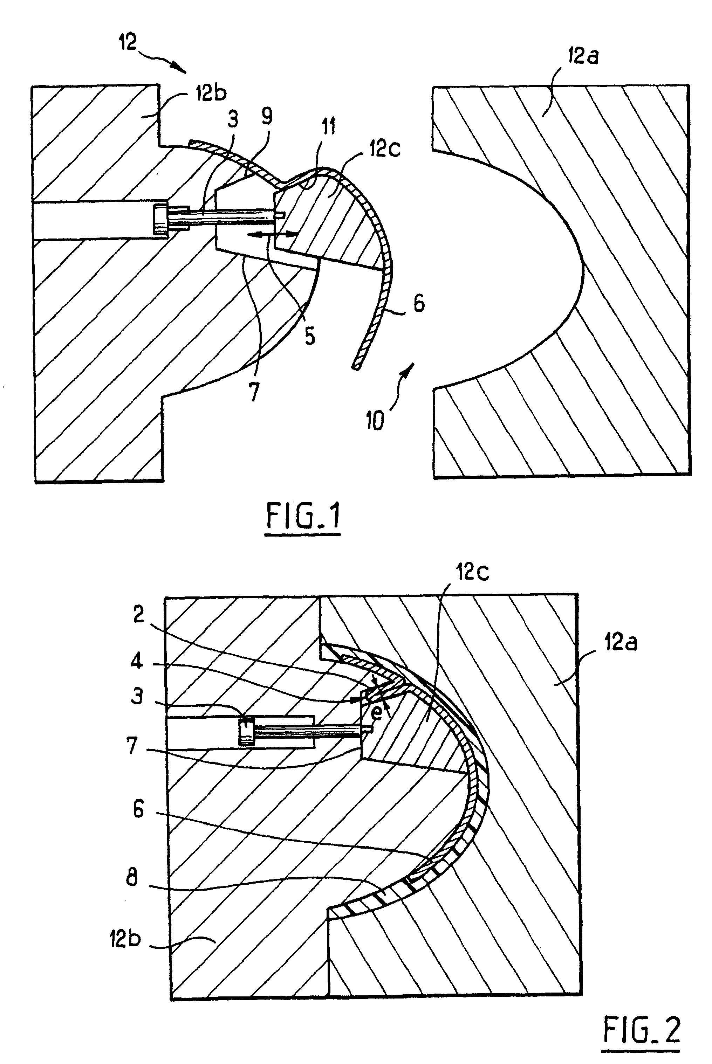

Aux figures 1 et 2, on voit illustré un moule 12 comprenant une partie fixe 12a constituée ici par une matrice concave et une partie mobile comportant un poinçon convexe 12b et une cale mobile 12c. Ces deux parties sont mobiles l'une par rapport à l'autre entre une position fermée et une position ouverte. L'ouverture/fermeture de ce moule est commandée en translation suivant une direction d'ouverture/fermeture du moule, par un vérin - non représenté -. La partie fixe et la partie mobile réservent entre elles une cavité de moulage 10.

La cale mobile 12c est liée au poinçon 12b par un vérin 3 qui commande son déplacement par rapport au poinçon 12b par translation sensiblement suivant la direction d'ouverture/fermeture du moule entre une position avancée et une position reculée, tel qu'illustré par la flèche 5.

En position reculée, la cale mobile 12c s'insère dans une cavité 7 du poinçon et laisse subsister une fente 4 entre l'un 11 de ses côtés et un côté adjacent 9 de la cavité 7 du poinçon.

A la figure 1, le moule 12 est en position ouverte - la partie fixe 12a et la partie mobile 12b, 12c sont largement distante l'une de l'autre -. Une feuille de liaison 6 est disposée en appui contre le poinçon 12b et la cale mobile 12c sur lesquels on accroche cette feuille. En particulier, une partie de cette feuille est en appui sur le côté 11 de la cale mobile 12c.

Les moyens de maintien (d'accrochage) - non représentés - de la feuille de liaison 6 sont considérés comme connus et peuvent notamment comprendre des clous ou de l'adhésif.

La cale mobile 12c est alors reculée jusqu'en appui contre le fond de la cavité 7 du poinçon. Tel qu'illustré à la figure 2, lors de cette opération les bords 11 et 9 respectivement de la cale mobile et du poinçon se rapprochent l'un de l'autre emprisonnant entre eux, dans la fente 4, une partie repliée non extrême 2 de la feuille. Cette partie repliée définit une boucle 2 ou méandre. L'épaisseur e de la fente présente une épaisseur sensiblement égale à deux fois celle de la feuille 6.

Le moule 12 est ensuite fermé, la partie fixe 12a venant au contact de la partie mobile 12b, 12c. Puis, on remplit la cavité de moulage par injection sous pression de matière plastique à partir de la partie fixe 12a du moule. La matière plastique vient au contact de la feuille de liaison 6 et y adhère. La largeur et l'épaisseur de la fente 4 étant sensiblement égales à celle de la boucle et l'épaisseur étant de plus très faible, la matière plastique ne pénètre pas dans cette fente 4 compte-tenu de la viscosité de la matière plastique.

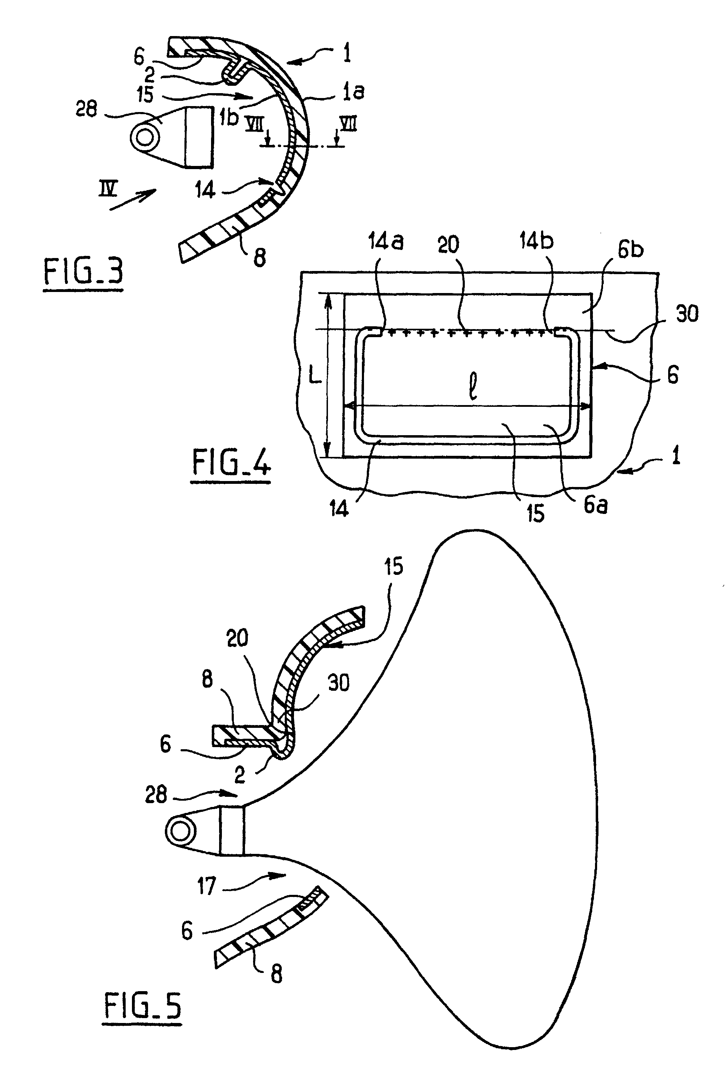

Aux figures 3 et 4, la pièce 1, obtenue après refroidissement de la matière plastique et démoulage, définit une planche de bord comportant une face concave non visible 1b et une face convexe visible 1a lorsque la planche de bord 1 est en situation. Ces deux faces sont séparées par l'épaisseur de la pièce 1.

Du côté non visible, la feuille de liaison 6 s'étend suivant la surface de la planche de bord et plus particulièrement suivant la surface d'un élément-support 8 auquel elle est intégrée. Cet élément-support 8 est réalisé à partir de la matière plastique injectée dans le moule. Bien que la feuille de liaison paraisse affleurante sur les dessins, en pratique et compte-tenu du procédé d'injection permettant de faire passer la matière de chaque côté de la feuille, par exemple en injectant en outre de la matière plastique à partir du poinçon, la feuille est plus précisément englobée dans le support 8.

Après démoulage, on a réalisé une découpe continue 14 formant entaille dans la pièce, par exemple à l'aide d'un laser. Cette découpe 14 est réalisée à partir de la face non visible 1b et s'étend vers la face visible 1a, sans toutefois déboucher dans cette face visible 1a. La découpe 14 passe à travers la feuille 6 et une partie de l'épaisseur du support 8, constituant ainsi un affaiblissement mécanique de ce support. Il subsiste entre le fond de cette entaille 14 et la face visible une épaisseur inférieure à 0,3 millimètre.

La découpe 14 s'étend entre deux extrémités 14a, 14b disposées en regard de la boucle 2 de la feuille de liaison 6. Cette découpe 14 présente globalement une forme de U et définit une portion fragilisée dans laquelle la feuille est absente.

Entre les extrémités 14a et 14b, on définit une portion d'articulation 20 s'étendant suivant un axe d'articulation 30. La portion d'articulation 20 ne présente pas de découpe de la feuille de liaison 6. Elle pourrait présenter un affaiblissement mécanique, bien que ce ne soit pas le cas à ces figures 3 et 4. Cette portion d'articulation est chevauchée par la feuille de liaison 6 qui s'étend continûment de part et d'autre de l'axe d'articulation 30.

La portion d'articulation 20 et la portion d'affaiblissement 14 définissent le pourtour d'une zone déterminée d'ouverture 15 formant un portillon pour un module de coussin gonflable 28 disposé du côté de la face non visible 1b.

Dans un but de meilleure compréhension, la portion d'articulation 20 a été symbolisée par des croix, et l'épaisseur de la feuille et du support a été augmentée par rapport à leurs autres dimensions.

Il apparaît à la figure 4 que le portillon 15 et en particulier son pourtour est entièrement et strictement inclus dans la zone définie par le contour extérieur de la feuille de liaison 6. Ainsi, la feuille de liaison 6 est présente sur tout le portillon et de part et d'autre de son pourtour tout entier. Ceci permet d'obtenir une meilleure résistance à la rupture de la planche de bord 1 sur le portillon et sur sa partie externe au portillon. La partie 6a de la feuille présente sur le portillon est reliée à celle extérieure au portillon - et dite marginale 6b - par la boucle 2 de la feuille de liaison et donc par la portion d'articulation 20.

Afin que le portillon soit entièrement inclus dans la zone définie par le contour extérieur de la feuille de liaison, cette feuille introduite dans le moule présente une longueur et une largeur supérieures à celles du portillon 15. Avantageusement, la feuille présente une longueur L - perpendiculairement à l'axe d'articulation - et une largeur l- parallèlement à l'axe d'articulation - sensiblement égales à 50 centimètres avec une marge de l'ordre de 25%, sachant que le portillon présente généralement une longueur de 10 à 15 centimètres et une largeur de 25 à 30 centimètres. Ainsi, la feuille et plus précisément sa partie marginale déborde d'au moins 5 centimètres au-delà du portillon, sur le reste de la planche de bord. Ceci permet d'obtenir une résistance mécanique satisfaisante de la planche de bord, sachant que la rupture de la portion fragilisée est généralement obtenue pour une pression appliquée sur l'ensemble du portillon comprise entre 10⁵ et 10⁷ Pa (de préférence proche de 2.10⁵ Pa).

A la figure 5, sous l'effort de déploiement du coussin gonflable se répartissant sur le portillon 15, la planche de bord 1 et plus précisément le support 8 se rompt dans la portion d'affaiblissement 14, de sorte que le portillon 15 pivote autour de l'axe d'articulation 30 et ménage un passage 17 à travers la planche de bord 1. Ce pivotement du portillon autour de l'axe d'articulation 30 est permis par la surlongueur de la feuille de liaison 6 formée par la boucle 2 - définissant un brin mort -, laquelle permet en outre de maintenir le portillon 15 avec le reste de la planche de bord 1. En effet, le support 8 en matière plastique risque de se rompre dans la portion d'articulation 20 sous les contraintes dues à ce pivotement.

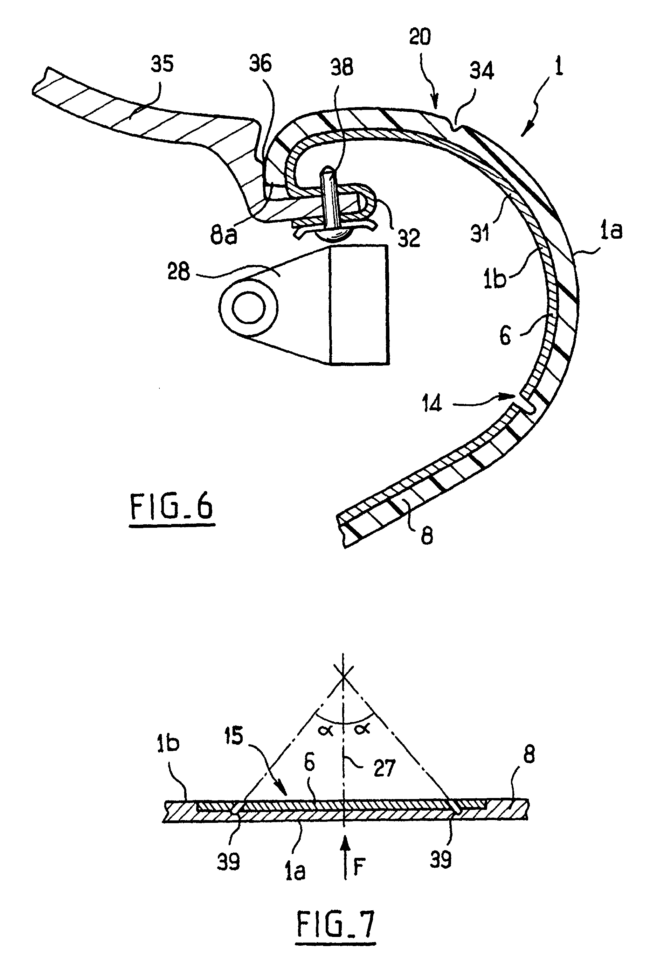

La figure 6 présente une variante de planche de bord 1. Celle-ci se distingue de celle des figures 1 à 5, par un affaiblissement mécanique dans la portion d'articulation 20 formé par une rainure 34 obtenue lors du moulage de la pièce et par le fait qu'elle est rapportée sur un corps 35 auquel elle est fixée par soudage suivant une ligne périphérique 36. L'affaiblissement mécanique 20 est formée par une striction réalisée sur la face visble 1a. Cette striction pourrait être réalisée sur la face non visible 1b. Sa fonction est de faciliter l'articulation du portillon et de permettre de se dispenser de la présence du brin mort (surlongueur de la feuille) en regard de la portion d'articulation, compte-tenu de la faible épaisseur de matière plastique.

En outre, la feuille 6 comprend une partie principale 31 qui s'étend sur toute la longueur - pas nécessairement toute la largeur - de la face non visible 1b de la pièce 1. En particulier, au-delà de la portion d'articulation 20, la feuille s'étend, perpendiculairement à l'axe d'articulation 30, jusqu'au bord 8a de la pièce. Elle se prolonge même au-delà du support 8 par une langue de liaison 32 liée au reste de la feuille. La partie principale 31 est fixée au support 8 c'est-à-dire maintenue intimement à ce support du fait de l'opération de moulage. La langue de liaison 32 n'est pas au contact du support 8, de sorte qu'elle y est liée, mais pas fixée sur lui.

La feuille 6 et plus précisément la langue de liaison est liée au corps 35 par une vis de fixation 38. Elle crée donc un moyen de liaison secondaire entre le corps de planche de bord 36 et la pièce 1. Ainsi, si l'effort créé par le déploiement du coussin gonflable venait à engendrer la rupture de la ligne de soudure 36, la pièce 1 resterait malgré tout maintenue sur le corps de la planche de bord par la langue 32.

La pièce 1 est obtenue en disposant la feuille dans la cavité de moulage et en laissant ressortir une partie de cette feuille définissant la langue de sorte que cette dernière ne soit pas recouverte de matière plastique.

A la figure 7, la pièce présente une découpe 39 définissant la portion fragilisée s'étendant dans l'épaisseur de la pièce, depuis la face non visible 1b vers la face visible 1a. Contrairement aux figures précédentes, cette découpe 39 n'est pas réalisée suivant la normale 27 à la face non visible 1a - au support 8 -. La direction de découpe est inclinée d'un angle α vers l'extérieur du portillon 15, par rapport à cette normale 27. Ici l'angle α vaut environ 45 degrés, il sera avantageusement compris entre 30 degrés et 60 degrés.

Ainsi, si un effort F est appliqué sur le portillon 15 du coté de la face visible 1a, ce portillon 15 ne pourra que très légèrement pivoter autour de l'axe d'articulation 30 du fait de l'inclinaison de la découpe.

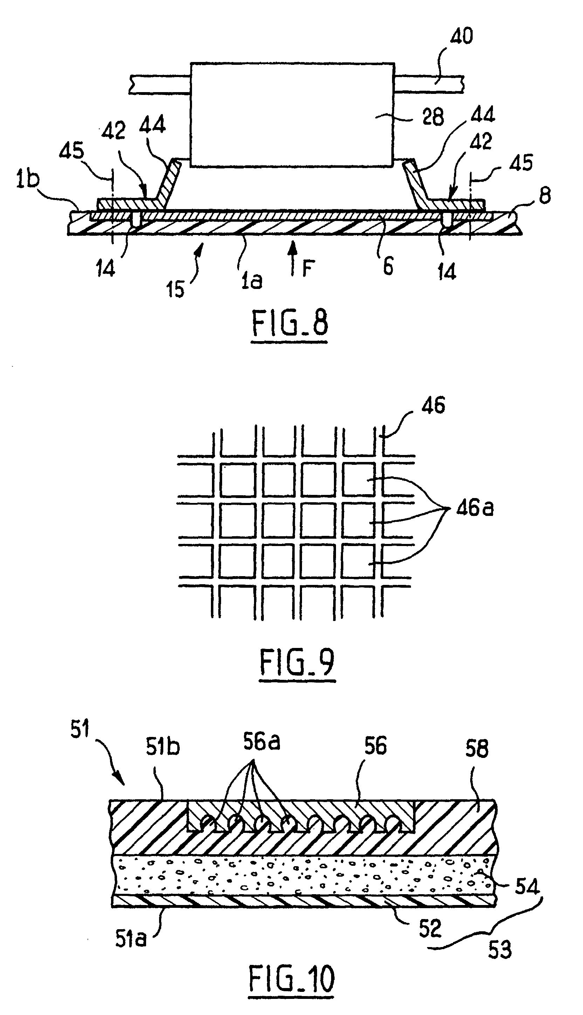

A la figure 8, un élément de maintien 42, ici une cornière en forme de U est disposée en appui contre la face non visible 1b de la planche de bord. Elle est fixée à la planche de bord 1 par l'intermédiaire de moyens de fixation 45, tels que des vis à l'extérieur du portillon 15. Cette cornière 42 chevauche la découpe 14, de sorte que si l'on exerce une force F sur la face visible 1a du portillon 15, celui-ci vient buter contre la cornière 42 et ne peut s'escamoter. Le portillon 15 ne présente ainsi qu'un seul sens d'ouverture.

Le module de coussin gonflable 28 est fixé à une traverse 40 pouvant notamment servir au maintien de la planche de bord 1, mais il n'est pas lié à la cornière, ce qui facilite le montage des différents éléments sur le véhicule. La cornière 42 possède en outre une partie évasée 44 allant en s'élargissant en direction de la planche de bord. Cette partie évasée disposée en regard d'une ouverture du module du coussin gonflable 28 sert au guidage du coussin gonflable lors de son déploiement.

A la figure 9, on voit illustré une feuille de liaison 46 présentant une structure grillagée. Cette structure pouvant notamment être obtenue à partir d'un matériau tissé ou tricoté, ménage des interstices 46a propres à être remplis par la matière plastique et permettant ainsi une meilleure adhésion avec cette matière. Cette feuille n'est pas fragile, mais souple dans la gamme de température pour laquelle le véhicule est conçu.

La figure 10 montre une pièce 51 comportant une feuille de liaison 56 présentant des alvéoles 56a remplies par la matière plastique du support 8. Ces alvéoles améliorent la liaison entre la feuille de liaison 56 et le support 8.

En outre, la pièce intègre, sur sa face visible 51a un complexe 53 comprenant une feuille de revêtement 52 et une couche de mousse 54. Ainsi, elle présente sur sa face visible 51a une bonne qualité d'aspect et un toucher souple et sur sa face non visible 51b la feuille souple de liaison 56.

Cette pièce est obtenue en disposant le complexe 53 dans le moule, en appui contre la matrice 12a.

Si la feuille de revêtement est un matériau auto-obturant, tel que du polychlorure de vinyle, on pourra réaliser une découpe quasi-débouchante, voire débouchante.

Sur les différentes figures, les épaisseurs de la feuille de liaison 6, du support 8 et du complexe 53 ont été proportionnellement augmentées par rapport aux dimensions générales de la planche de bord dans le but d'une meilleure compréhension. En réalité, une telle planche de bord présente une largeur d'environ 1,5 mètres, une longueur (hauteur) de 50 centimètres et une épaisseur comprise entre 2 et 50 millimètres, à 10% près. La feuille de liaison présente avantageusement une épaisseur comprise entre 0,1 millimètre et 3 millimètres. Dans le cas d'une planche de bord monocouche en matière plastique injectée, la matière plastique présentera avantageusement une épaisseur comprise entre 1 et 6 millimètres. Dans le cas d'une planche de bord multicouche, la feuille de revêtement présentera avantageusement une épaisseur comprise entre 0,2 millimètre et 6 millimètres, l'épaisseur de la (des) couche(s) de mousse sera avantageusement comprise entre 2 et 50 millimètres et l'épaisseur du support sera comprise entre 1 et 6 millimètres.

Bien entendu l'invention n'est nullement limitée aux réalisations illustrées. Ainsi, à la figure 6, la feuille 6 pourrait être dépourvue de langue 32 débordant du support 8 - notamment en modifiant légèrement l'extrémité du support 8, en particulier en lui donnant la forme d'un U -, l'important étant de lier la feuille 6 au corps 35. La vis de fixation 38 passerait alors à travers le corps 35, le support 8 et la feuille 6.

La feuille de liaison pourrait déjà présenter, lorsqu'on l'introduit dans le moule, une découpe définissant une entaille se caractérisant par une absence de la feuille de liaison à l'endroit où l'on souhaite réaliser la portion fragilisée dans la pièce finie.

On pourrait également prévoir de réaliser deux découpes en U superposées et en sens inverse de sorte que l'entaille globale se présenterait sous la forme d'un H : deux axes d'articulation étant prévus, l'un au pied du H et l'autre à la tête du H.

La découpe pourrait être réalisée en pointillés, constituée d'une succession de trous très proches les uns des autres, avantageusement d'un diamètre compris entre 0,05 millimètre et 0,5 millimètre et distant les uns des autres de 0 à 2 millimètres - de préférence entre 0,5 et 0,7 millimètre dans le cas d'un support en polypropylène -.

La section de la découpe pourrait également être triangulaire.

## Revendications

1. Procédé pour réaliser une pièce finie (1, 51) comprenant une zone déterminée (15) formant un portillon de coussin gonflable et destinée à permettre la création d'un passage (17) pour le coussin gonflable, comportant les étapes suivantes :
a) réaliser une pièce comprenant un élément-support (8) en matière(s) plastique(s) qui présente une faible épaisseur rapportée à ses autres dimensions et une feuille de liaison (6, 46, 56) présentant une longueur et une largeur supérieures à celles de la zone déterminée et s'étendant sensiblement suivant la surface de cet élément-support, mais ne s'étendant pas sur toute la surface de cet élément-support,
b) ménager dans la pièce la zone déterminée, laquelle est délimitée par un pourtour constitué d'une portion fragilisée (14) présentant entre deux extrémités (14a, 14b) un affaiblissement mécanique et d'une portion d'articulation (20) définissant, entre ces deux extrémités, un axe d'articulation (30) chevauché par la feuille de liaison, de telle sorte que la feuille de liaison soit présente de part et d'autre de la portion fragilisée, le long d'au moins la majeure partie de cette portion et que la feuille de liaison soit présente sur au moins l'essentiel de la zone déterminée,
**caractérisé en ce que** lors de l'étape a), on réalise les opérations suivantes :
- on introduit la feuille de liaison dans une cavité de moulage (10),
- on introduit de la matière plastique dans la cavité de moulage, cette matière plastique venant au contact de la feuille de liaison, de chaque côté de ladite feuille de liaison, afin d'englober ladite feuille de liaison dans l'élément-support (8).

2. Procédé selon la revendication 1, **caractérisé en ce que** lors de l'étape b), dans une partie au moins de la portion fragilisée, on réalise simultanément une découpe de la feuille de liaison et un affaiblissement mécanique de l'élément-support par découpe d'une partie de son épaisseur.

3. Procédé selon l'une quelconque des revendications précédentes, **caractérisé en ce que** lors de l'étape b), on réalise la portion fragilisée de telle sorte qu'elle soit entièrement et strictement incluse dans la feuille de liaison.

4. Procédé selon l'une quelconque des revendications précédentes, **caractérisé en ce que** :
- on utilise un moule (12) comprenant outre la cavité de moulage (10), une matrice (12a), un poinçon (12b) et une cale mobile (12c) entre une position reculée et une position avancée, cette cale mobile s'insérant dans une cavité (7) du poinçon en ménageant une fente (4) entre elle et le poinçon lorsqu'elle est en position reculée et s'écartant du poinçon lorsqu'elle est déplacée vers la position avancée,
- lors de l'étape a), on introduit la feuille de liaison dans la cavité de moulage, cale mobile avancée ; puis en reculant la cale mobile on dispose dans cette fente une partie repliée de la feuille de liaison ; et on introduit la matière plastique dans la cavité de moulage.

5. Procédé selon l'une quelconque des revendications précédentes, **caractérisé en ce que** :
- lors de l'étape a), on réalise la pièce telle que la feuille de liaison soit présente sur toute ou du moins l'essentiel de la pièce perpendiculairement à l'axe d'articulation,
- on rapporte par fixation la pièce sur un corps (35), et
- on lie la feuille de liaison au corps.

6. Procédé selon la revendication 3 et 5, **caractérisé en ce que** :
- lors de l'étape a), on fait ressortir une langue (32) de cette feuille de liaison de la cavité de moulage,
- et on lie la langue (32) de la feuille de liaison sur le corps (35).

7. Pièce finie (1) composite comprenant
- un élément-support (8) en matière plastique présentant une épaisseur faible rapportée à ses autres dimensions,
- une feuille de liaison (6) liée à l'élément-support et ne s'étendant pas sur toute la surface de cet élément-support,
dans laquelle, ladite pièce présente une zone déterminée (15) formant un portillon de coussin gonflable et destinée à permettre la création d'un passage (17) pour le coussin gonflable, cette zone étant délimitée par un pourtour constitué d'une portion fragilisée (14) présentant deux extrémités (14a, 14b) et d'une portion d'articulation (20) définissant, entre ces deux extrémités, un axe d'articulation (30) chevauché par la feuille de liaison, et ladite feuille de liaison étant présente sur l'essentiel de la zone déterminée, le long et de part et d'autre d'au moins la majeure partie de la portion fragilisée, **caractérisée en ce que** la feuille de liaison est englobée dans l'élément-support (8).

8. Pièce selon la revendication 7, **caractérisée en ce que** la feuille de liaison présente une boucle (2) en regard de la portion d'articulation (20).

9. Pièce selon l'une quelconque des revendications 7 ou 8, **caractérisée en ce que** la feuille de liaison présente une partie marginale (6b) fixée à la pièce et entourant la zone déterminée.

10. Pièce selon l'une quelconque des revendications 7 à 9, **caractérisée en ce que** la feuille de liaison s'étend, perpendiculairement à l'axe d'articulation, au-delà de la portion d'articulation et au moins jusqu'au bord de la pièce.

11. Pièce selon l'une quelconque des revendications 7 à 10, **caractérisée en ce que** :
- elle présente essentiellement une face d'aspect (1a) et une face non visible (1b) séparées par l'épaisseur de la pièce, et la portion fragilisée (39) du pourtour comprend une découpe ménagée dans l'épaisseur de la pièce, depuis sa face non visible vers sa face d'aspect,
- et la découpe est inclinée par rapport à la normale (27) à la face non visible, vers l'extérieur de la zone déterminée.

12. Pièce selon la revendication 11, **caractérisée en ce que** l'inclinaison de la découpe (39) par rapport à la normale (27) à la surface non visible (1b) est comprise entre 30 degrés et 60 degrés, environ.

13. Pièce selon l'une quelconque des revendications 7 à 12, **caractérisée en ce que** :
- elle présente essentiellement une face d'aspect (la) et une face non visible (1b) séparées par l'épaisseur de la pièce, et la portion fragilisée (14) du pourtour comprend une découpe continue ménagée dans l'épaisseur de la pièce, depuis sa face non visible vers sa face d'aspect,
- elle comprend en outre un élément de maintien (42) disposé contre une partie de la face non visible, en chevauchant la découpe et fixé à la pièce à l'extérieur de la zone déterminée (15).

14. Ensemble comprenant une pièce selon l'une des revendications 7 à 13, **caractérisé en ce que** :
- il comprend en outre un corps (35) sur lequel est fixée la pièce, et
- la feuille de liaison est liée au corps (35).

15. Ensemble selon la revendication 14, **caractérisé en ce que** :
- la feuille de liaison comprend une langue de liaison (32) débordant de l'élément-support, et
- la langue de la feuille de liaison (32) est liée au corps (35).

## Patentansprüche

1. Verfahren zum Herstellen eines Fertigbauteils (1, 51) mit einem abgegrenzten Bereich (15), der eine Tür für ein aufblasbares Kissen bildet und dazu bestimmt ist, die Bildung eines Durchgangs (17) für das aufblasbare Kissen zu gestatten, mit den folgenden Schritten:
a) Herstellen eines Bauteils mit einem Stützelement (8) aus Kunststoff(en), das eine geringe Dicke bezüglich seiner anderen Abmessungen aufweist, und mit einer Verbindungsfolie (6, 46, 56), die eine Länge und eine Breite aufweist, welche größer als die des abgegrenzten Bereichs sind, und die sich im wesentlichen entlang der Oberfläche dieses Stützelements, jedoch nicht auf der ganzen Oberfläche dieses Stützelements erstreckt,
b) in dem Fertigbauteil Bilden des abgegrenzten Bereichs, der durch einen äußeren Umfang begrenzt ist, welcher aus einem brechbar ausgestalteten Abschnitt (14), der zwischen zwei Enden (14a, 14b) eine mechanische Schwächung aufweist, und aus einem Gelenkabschnitt (20) besteht, der zwischen diesen zwei Enden eine Drehachse (30) bestimmt, die von der Verbindungsfolie derart überlappt wird, daß die Verbindungsfolie auf beiden Seiten des brechbar ausgestalteten Abschnitts entlang mindestens dem größten Teil dieses Abschnitts vorhanden ist und daß die Verbindungsfolie auf mindestens dem Hauptteil des abgegrenzten Bereichs vorhanden ist,
**dadurch gekennzeichnet, daß** man während des Schrittes a) folgende Tätigkeiten durchführt:
- Einführen der Verbindungsfolie in eine Formvertiefung (10),
- Einführen des Kunststoffs in die Formvertiefung, wobei dieser Kunststoff auf jeder Seite der Verbindungsfolie mit dieser in Kontakt kommt, um die Verbindungsfolie in dem Stützelement (8) einzuschließen.

2. Verfahren nach Anspruch 1, **dadurch gekennzeichnet, daß** man während des Schrittes b) mindestens in einem Teil des brechbar ausgestalteten Abschnitts gleichzeitig einen Schnitt der Verbindungsfolie und eine mechanische Schwächung des Stützelements durch Schneiden eines Teils seiner Dicke durchführt.

3. Verfahren nach einem der vorhergehenden Ansprüche, **dadurch gekennzeichnet, daß** man während des Schrittes b) den brechbar ausgestalteten Abschnitt derart ausführt, daß er vollkommen und genau in der Verbindungsfolie eingeschlossen ist.

4. Verfahren nach einem der vorhergehenden Ansprüche, **dadurch gekennzeichnet, daß** man:
- eine Form (12) verwendet, die außer der Formvertiefung (10) eine Matrix (12a), einen Stempel (12b) und einen beweglichen Keil (12c) zwischen einer zurückgeschobenen Position und einer vorgeschobenen Position aufweist, wobei sich dieser bewegliche Keil in eine Vertiefung (7) einfügt, wobei er einen Schlitz (4) zwischen sich und dem Stempel bildet, wenn er sich in zurückgeschobener Position befindet, und sich von dem Stempel entfernt, wenn er zu der vorgeschobenen Position hin verschoben wird,
- während des Schrittes a) die Verbindungsfolie in die Formvertiefung einführt, wobei der bewegliche Keil nach vorn geschoben ist; dann unter Zurückschieben des beweglichen Keils in diesen Schlitz einen umgeschlagenen Teil der Verbindungsfolie anordnet; und den Kunststoff in die Formvertiefung einführt.

5. Verfahren nach einem der vorhergehenden Ansprüche, **dadurch gekennzeichnet, daß** man:
- während des Schrittes a) das Bauteil so ausführt, daß die Verbindungsfolie auf dem ganzen oder mindestens dem Hauptteil des Bauteils senkrecht zu der Drehachse vorhanden ist,
- durch Befestigung das Bauteil auf einem Körper (35) aufbringt, und
- die Verbindungsfolie mit dem Körper verbindet.

6. Verfahren nach Anspruch 3 und 5, **dadurch gekennzeichnet, daß** man:
- während des Schrittes a) eine Zunge (32) dieser Verbindungsfolie aus der Formvertiefung hervortreten läßt,
- und die Zunge (32) der Verbindungsfolie mit dem Körper (35) verbindet.

7. Zusammengesetztes Fertigbauteil (1) mit:
- einem Stützelement (8) aus Kunststoff mit einer bezogen auf seine anderen Abmessungen geringen Dicke,
- einer Verbindungsfolie (6), die mit dem Stützelement verbunden ist und sich nicht auf die gesamte Oberfläche dieses Stützelements erstreckt, wobei das Bauteil einen abgegrenzten Bereich (15) aufweist, der eine Tür für ein aufblasbares Kissen bildet und dazu bestimmt ist, die Bildung eines Durchgangs (17) für das aufblasbare Kissen zu gestatten, wobei dieser Bereich durch einen äußeren Umfang abgegrenzt ist, der aus einem brechbar ausgestalteten Abschnitt (14) besteht, welcher zwei Enden (14a, 14b) aufweist, und aus einem Gelenkabschnitt (20) besteht, welcher zwischen diesen zwei Enden eine Drehachse (30) bestimmt, die von der Verbindungsfolie überlappt wird, und wobei die Verbindungsfolie auf dem Hauptteil des abgegrenzten Bereichs entlang und auf beiden Seiten mindestens des Hauptteils des brechbar ausgestalteten Abschnitts vorhanden ist, **dadurch gekennzeichnet, daß** die Verbindungsfolie in dem Stützelement (8) eingeschlossen ist.

8. Bauteil nach Anspruch 7, **dadurch gekennzeichnet, daß** die Verbindungsfolie eine Schlaufe (2) gegenüber dem Gelenkabschnitt (20) aufweist.

9. Bauteil nach einem der Ansprüche 7 oder 8, **dadurch gekennzeichnet, daß** die Verbindungsfolie einen Randteil (6b) aufweist, der an dem Bauteil befestigt ist und den abgegrenzten Bereich umgibt.

10. Bauteil nach einem der Ansprüche 7 bis 9,**dadurch gekennzeichnet, daß** sich die Verbindungsfolie senkrecht zu der Drehachse über den Gelenkabschnitt und mindestens bis zu dem Rand des Bauteils erstreckt.

11. Bauteil nach einem der Ansprüche 7 bis 10, **dadurch gekennzeichnet, daß**:
- es im wesentlichen eine Ansichtsseite (1a) und eine nicht sichtbare Seite (1b) aufweist, die durch die Dicke des Bauteils getrennt sind, und wobei der brechbar ausgestaltete Abschnitt (39) des äußeren Umfangs einen Schnitt aufweist, der in der Dicke des Bauteils von seiner nicht sichtbaren Fläche zu seiner Ansichtsfläche hin gebildet ist,
- und der Schnitt bezüglich der Normalen (27) an der nicht sichtbaren Fläche nach außen zu dem abgegrenzten Bereich hin geneigt ist.

12. Bauteil nach Anspruch 11, **dadurch gekennzeichnet, daß** die Neigung des Schnitts (39) bezüglich der Normalen (27) an der nicht sichtbaren Oberfläche (1b) zwischen etwa 30° und 60° beträgt.

13. Bauteil nach einem der Ansprüche 7 bis 12, **dadurch gekennzeichnet, daß**:
- es im wesentlichen eine Ansichtsfläche (1a) und eine nicht sichtbare Fläche (1b) aufweist, die durch die Dicke des Bauteils getrennt sind, und der brechbar ausgestaltete Abschnitt (14) des äußeren Umfangs einen fortlaufenden Schnitt aufweist, der in der Dicke des Bauteils von der nicht sichtbaren Fläche zu der Ansichtsfläche hin gebildet ist,
- es ferner ein Halteelement (42) aufweist, das gegen einen Teil der nicht sichtbaren Fläche angeordnet ist, wobei es den Schnitt überlappt und an dem Bauteil außerhalb des abgegrenzten Bereichs (15) befestigt ist.

14. Aufbau mit einem Bauteil nach einem der Ansprüche 7 bis 13, **dadurch gekennzeichnet, daß**:
- er ferner einen Körper (35) aufweist, auf welchem das Bauteil befestigt ist,
- die Verbindungsfolie mit dem Körper (35) verbunden ist.

15. Aufbau nach Anspruch 14, **dadurch gekennzeichnet, daß**:
- die Verbindungsfolie eine Verbindungszunge (32) aufweist, die aus dem Stützelement heraustritt, und
- die Zunge der Verbindungsfolie (32) mit dem Körper (35) verbunden ist.

## Claims

1. Method for producing a finished part (1, 51) comprising a special zone (15) which forms a door for an airbag and is designed to allow a passageway (17) for the airbag to be created, having the following stages:
a) producing a part comprising a support element (8) made of plastic and having a reduced thickness in comparison to its other dimensions and a connecting sheet (6, 46, 56) presenting a length and a breadth greater than those of the special zone and extending substantially along the surface of said support element, but not extending over the whole surface of said support element,
b) incorporating into the part the special zone, which is delimited by a periphery constituted by an embrittled portion (14) which has been mechanically weakened between two extremities (14a, 14b) and by an articulating portion (20) which defines between these two extremities an articulation axis (30) overlapped by the sheet, in such a way that the connecting sheet is present on either side of the embrittled portion, along at least the major part of said portion, and that the connecting sheet is present over at least the greater part of the special zone,
**characterised in that** during stage a) the following operations are carried out:
- the connecting sheet is introduced into a mould cavity (10), and
- plastics material is introduced into the mould cavity, said plastics material making contact with the connecting sheet, from either side of said connecting sheet, in order to encompass said connecting sheet in the support element (8).

2. Method according to claim 1, **characterised in that** during stage b), in at least part of the embrittled portion simultaneously a cutout is made in the connecting sheet and the support mechanically weakened by excising part of the thickness thereof.

3. Method according to anyone of the preceding claims,
**characterised in that** during stage b), the embrittled portion is produced in such a manner that it is wholly and strictly enclosed within the connecting sheet.

4. Method according to anyone of the preceding claims,
**characterised in that**:
- using a mould (12) further comprising a mould cavity (10), a female die (12a), a male die (12b) and an insert (12c) adapted to be moved between a retracted position and an advanced position, said movable insert being inserted into a cavity (7) on the male die, thereby producing a slot (4) between it and the male die when the insert is in the retracted position and moving further away from the male die when it is displaced towards the advanced position,
- during stage a), introducing the connecting sheet into the mould cavity, with the movable insert advanced; then by retracting the movable insert a folded section of the connecting sheet is retained in said slot; the plastics material is now introduced into the mould cavity.

5. Method according to anyone of the preceding claims,
**characterised in that**:
- during stage a), the part is produced in such a way that the connecting sheet covers all or at least most of the part, in a direction perpendicular to the articulation axis,
- the part is attached by fixing it to a body (35), and
- the connecting sheet is joined to the body.

6. Method according to claim 3 and 5, **characterised in that**:
- during stage a), a tongue (32) of said connecting sheet is sticked out from the mould cavity,
- and the tongue (32) of the connecting sheet is connected to the body (35).

7. Composite finished part (1) comprising:
- a support element (8) made of plastic and having a reduced thickness in comparison to its other dimensions,
- a connecting sheet (6) joined to the support element and not extending over the whole surface of said support element,
wherein said part presents a special zone (15) which forms a door for an airbag and is designed to make it possible to create a passageway (17) for the airbag, said zone being delimited by a periphery constituted by an embrittled portion (14) presenting two extremities (14a, 14b) and by an articulating portion (20) which defines, between said two extremities, an articulation axis (30) overlapped by the connecting sheet, and said connecting sheet is present over the greater part of the special zone, along and on either side of at least the major part of the embrittled portion,
**characterised in that** the connecting sheet is encompassed in the support element (8).

8. Part according to claim 7, **characterised in that** the connecting sheet presents a loop (2) facing said articulating portion (20).

9. Part according to anyone of claim 7 or 8, **characterised in that** the connecting sheet presents a fringe portion (6b) which is fixed to the part and surrounds the special zone.

10. Part according to anyone of claims 7 to 9, **characterised in that** the connecting sheet extends, in a direction perpendicular to the articulation axis, beyond the articulating portion and at least as far as the edge of the part.

11. Part according anyone of claims 7 to 10, **characterised in that**:
- it presents essentially one visible face (1a) and one non-visible face (1b) separated by the thickness of the part, and the embrittled portion (39) of the periphery comprises a cutout produced in the thickness of the part, from its non-visible face to its visible face,
- and the cutout is inclined, with respect to the line (27) normal to the non-visible face, towards the outside of the special zone.

12. Part according to claim 11, **characterised in that** the angle of the cutout (39) relative to the line (27) normal to the non-visible surface (1b) is between approximately 30 degrees and 60 degrees.

13. Part according to anyone of claims 7 to 12, **characterised in that**:
- it presents essentially one visible face (1a) and one non-visible face (1b) separated by the thickness of the part, and the embrittled portion (14) of the periphery comprises a continuous cutout made in the thickness of the part, from its non-visible face to its visible face,
- it further comprises a retaining element (42) disposed against a section of the non-visible face, overlapping the cutout and fixed on the part to the outside of the special zone (15).

14. Assembly comprising a part as claimed in anyone of claims 7 to 13, **characterised in that**:
- it further comprises a body (35) onto which the part is fixed, and
- the connecting sheet is connected to the body (35).

15. Assembly according to claim 14, **characterised in that**
- the connecting sheet comprises a connecting tongue (32) emerging from the support, and
- the tongue of the connecting sheet (32) is connected to the body (35).
